# EUROPÄISCHE PATENTSCHRIFT

(11) **EP 0 802 997 B1**
(45) Veröffentlichungstag und Bekanntmachung des Hinweises auf die Patenterteilung: **28.06.2000**
(21) Anmeldenummer: 96945882.7
(22) Anmeldetag: 12.11.1996
(51) Int. Cl.: D04H 13/00

(54) **FLÄCHENELEMENT**
FLAT ELEMENT
ELEMENT DE SURFACE

(30) Priorität: 13.11.1995 DE 19542210
(43) Veröffentlichungstag der Anmeldung: 29.10.1997
(73) Patentinhaber: HELSA-WERKE HELMUT SANDLER GmbH & CO. KG, 95482 Gefrees (DE)
(72) Erfinder: BÖTTGER, Kerstin, D-95239 Zell (DE); HOFFMANN, Regina, D-95213 Münchberg (DE); STÖCKER, Peter, D-95482 Gefrees (DE); WOLFRUM, Hermann, D-95213 Münchberg (DE)
(74) Vertreter: LOUIS, PÖHLAU, LOHRENTZ & SEGETH
(86) Internationale Anmeldenummer: DE9602174
(87) Internationale Veröffentlichungsnummer: WO9718157

(56) Entgegenhaltungen:
- EP-A- 0 151 018
- EP-A- 0 493 082
- DE-A- 3 704 529
- FR-A- 2 475 982
- US-A- 4 192 086
- US-A- 5 236 769

## Beschreibung

Die Erfindung betrifft ein Flächenelement mit einem luftdurchlässigen Träger, der mit einem Adsorber ausgerüstet ist, wobei der Adsorber-Träger als Flächenelement ausgebildet ist, das mit einer saugfähigen, Feuchtigkeit speichernden Vlieslage durch Vernadelung flächig zu einem luftdurchlässigen Verbundmaterial verbunden ist, wobei die Vernadelung von der Vlieslage zum Adsorber-Träger orientiert ist und die Faserbärte der Vernadelung sich von der Vlieslage zum Adsorber-Träger und durch diesen hindurcherstrecken.

Auf vielen Gebieten des täglichen Lebens wie bei Sitzen, Schuhen, Heimtextilien, Bekleidung, Sportanwendungen o.dgl. ergibt sich das Problem, ein bestimmtes Komfort-Klima zu realisieren. Bei Sitzen wie Fahrzeugsitzen, Kindersicherheitssitzen, Bürostühlen, Polstersitzen o.dgl. handelt es sich um das Sitzklima, das oftmals Wünsche offen läßt. Bei Schuhen sind es u.a. die Schuheinlagen, die Brandsohle oder das Futter, die das Klima im Schuh beeinflussen bzw. beeinträchtigen. Bei den Heimtextilien kann es sich um Decken, Matratzen, Inkontinenz-Produkte usw. handeln, bei welchen das Klima oftmals noch Wünsche offen läßt. Entsprechend kann bei der Bekleidung in Form von Arbeitsschutzkleidung, Motorrad-Bekleidung, ABC-Bekleidung o.dgl. das Klima noch Wünsche offen lassen. Bei den Sportanwendungen handelt es sich bspw. um Rucksäcke, Rucksackträger, Rückenpolster, Gelenkschützer, Handschuhe, Helme o.dgl. Auch hier läßt das gewünschte Klima oftmals Wünsche offen.

Das besagte, oftmals noch Wünsche offen lassende Klima resultiert daraus, daß von einer Person abgegebene Feuchtigkeit nicht ausreichend abgeführt, d.h. abtransportiert wird.

Aus der US-A 4 192 086 ist ein Flächenelement der eingangs genannten Art mit einem luftdurchlässigen Träger bekannt, der mit einem Adsorber ausgerüstet ist, wobei der Adsorber-Träger als Flächenelement ausgebildet ist, das mit einer saugfähigen, Feuchtigkeit speichernden Vlieslage durch Vernadelung flächig zu einem luftdurchlässigen Verbundmaterial verbunden ist. Die Vernadelung ist von der Vlieslage zum Adsorber-Träger orientiert und die Faserbärte der Vernadelung erstrecken sich von der Vlieslage zum Adsorber-Träger und durch diesen hindurch. Der Adsorber-Träger ist von einer Cellulose-Schicht gebildet. Auf der von der Vlieslage abgewandten Seite der Cellulose-Schicht ist eine Schaumstofflage vorgesehen, um ein Verrutschen des Flächenelementes, bei dem es sich um eine Schuheinlegesohle handelt, im jeweiligen Schuh zu verhindern. Außerdem dient diese Schaumstofflage dem Trittkomfort.

Die als Adsorber-Träger dienende, relativ dichte Cellulose-Schicht gewährleistet für mit Geruchsstoffen und Feuchtigkeit beladene Gase keinen ausreichenden Kontakt. Außerdem ist die Luft- und Wasserdampfdurchlässigkeit gering, weshalb dort zur Erhöhung des Kontaktes zwischen den Geruchsstoffen und dem Adsorber ein Pumpeffekt ausgenutzt wird. Dieser Pumpeffekt wird durch eine Perforation des Flächenelementes bewirkt. Außerdem besitzt die Cellulose-Schicht nur eine kleine oder überhaupt keine Dehnbarkeit. Das ist bei Schuheinlagen unproblematisch. Bei Sitzen als Sitzauflage würde ein solches nicht dehnbares Flächenelement jedoch als störend empfunden werden. Infolge der Tatsache, daß in der den Adsorber-Träger bildenden Cellulose-Schicht nur relativ geringe Adsorbermengen einlagerbar sind, ergibt sich bei diesem bekannten Flächenelement der Mangel, daß die Adsorptionseigenschaften und die Feuchtigkeits-Aufnahmeeigenschaften Wünsche offen lassen.

Aus der EP-A 0 151 018 ist ein Flächenelement mit einer hydrophilen Zentrallage und mit einer diese allseitig bedeckenden hydrophopen Lage bekannt. Diese Lagen sind miteinander vernadelt, wobei die hydrophile Zentrallage vorzugsweise eine Moosgummilage und die hydrophope Decklage vorzugsweise ein Polstervlies ist. Adsorber kommen bei diesem Flächenelement nicht zur Anwendung.

Der Erfindung liegt die Aufgabe zugrunde,ein Flächenelement der eingangs genannten Art zu schaffen, mit welchem die Feuchtigkeit optimal weggeleitet wird, bzw. das dazu geeignet ist, Feuchtigkeit optimal aufzunehmen und temporär zu speichern, bzw. von der jeweiligen Feuchtigkeitsquelle wegzutransportieren, so daß sich ein guter Klimakomfort ergibt.

Diese Aufgabe wird bei einem Flächenelement der eingangs genannten Art erfindungsgemäß dadurch gelöst, daß der Adsorber-Träger aus einem offenporigen Schaummaterial besteht, das mit Adsorberpartikeln ausgerüstet ist, oder daß der Adsorber-Träger aus einem Vliesstoff besteht, der mit Adsorberpartikeln ausgerüstet ist, oder daß der Adsorber-Träger aus einem Textilmaterial besteht, das mit Adsorberpartikeln ausgerüstet ist, oder daß der Adsorber-Träger aus einem aktivierten Kohlenstoffaser-Material besteht.

Von einer Feuchtigkeitsquelle generierte Feuchtigkeit wird zum Adsorber-Träger und zur Vlieslage transportiert. Dabei wird zuerst die Vlieslage mit Feuchtigkeit gesättigt. Gleichzeitig erfolgt eine Speicherung von Feuchtigkeit in dem Adsorber-Träger bzw. im Adsorber des Adsorber-Trägers. Nach der Sättigung der Vlieslage kann also im Adsorber-Träger bzw. im Adsorber des Adsorber-Trägers weitere überschüssige Feuchtigkeit gespeichert werden. Ist die Feuchtigkeitsquelle zu einem späteren Zeitpunkt dann nicht mehr vorhanden, d.h. vom erfindungsgemäßen Flächenelement getrennt, so kommt es in vorteilhafter Weise zu einer Regenerierung des erfindungsgemäßen Flächenelementes, d.h. zu einer Feuchteabgabe durch Trocknung bei Umgebungsklima. Gleichzeitig wird in vorteilhafter Weise durch den Adsorber eine Geruchsbindung gewährleistet.

Bei dem bei einer Ausbildung des erfindungsgemäßen Flächenelementes zur Anwendung gelangenden Schaummaterial handelt es sich vorzugsweise um einen Kunststoffschaum, wie einen PU-Schaum. Das Schaummaterial kann an seiner Außenoberfläche und in seinem Inneren, d.h. an den Porenwänden bzw. in den Poren mit den Adsorberpartikeln ausgerüstet sein. Diese können in einer Korngröße bzw. Kornfraktion oder in unterschiedliche Korngrößen bzw- fraktionen vorgesehen sein. Bei den Adsoberpartikeln kann es sich um Aktivkohlepartikel oder um andere an sich bekannte Adsorberpartikel wie Zeolithe o.dgl.handeln.

Erfindungsgemäß kann der Adsorber-Träger auch aus einem Vliesstoff oder aus einem Textilmaterial bestehen und mit geeigneten Adsorber-Partikeln ausgerüstet sein. Eine weitere Möglichkeit besteht darin, daß der Adsorber-Träger aus einem aktivierten Kohlenstoffaser-Material besteht. Hier bildet der Adsorber-Träger also das Adsorbens.

Bei dem erfindungsgemäßen Flächenelement kann der Adsorber-Träger eine Wanddicke von 0,5 bis 5 mm aufweisen. Selbstverständlich kann bei dem erfindungsgemäßen Flächenelement der Adsorber-Träger auch eine andere Wanddicke besitzen.

Das erfindungsgemäße Flächenelement ist in Bezug zu einer Feuchtigkeitsquelle derartig positioniert, daß die saugfähige Vlieslage von der Feuchtigkeitsquelle abgewandt ist. Die besagte Vlieslage kann einen hohen Viskose-Anteil aufweisen. Eine derartige Vlieslage kann ein Flächengewicht von 50 bis 200 g/m² besitzen. In Abhängigkeit vom jeweiligen Anwendungsgebiet des erfindungsgemäßen Flächenelementes kann die Vlieslage selbstverständlich auch ein anderes als das zuletzt angegebene Flächengewicht besitzen.

Je nachdem, wo das erfindungsgemäße Flächenelement zur Anwendung gelangt, kann die Vlieslage aus einem (hoch)saugfähigen, feuchtigkeitsaufnehmenden Fasermaterial, vorzugsweise Viskose, aus einem flammfesten Fasermaterial, aus Karbonfasern und/oder aktivierten Karbonfasern bzw. aus Schmelzfasern bestehen oder zumindest einen Anteil an Schmelzfasern aufweisen. Selbstverständlich können auch andere geeignete Fasermaterialien wie Polyacrylfasern o.ä. zur Anwendung gelangen.

An der von der Vlieslage abgewandten Oberseite des Verbundmaterials kann ein luft- und feuchtigkeitsdurchlässiges Obermaterial festgelegt sein. Bei diesem Obermaterial kann es sich um ein textiles Flächenmaterial, um ein Leder- oder um ein Kunstledermaterial handeln. Das Obermaterial kann an der Oberseite des Verbundmaterials, d.h. an der von der Vlieslage abgewandten Seite des erfindungsgemäßen Flächenelementes und somit an der einer möglichen Feuchtigkeitsquelle zugewandten Seite, festgeklebt sein. Diese Verklebung kann mittels eines Sprühklebers, mittels eines Klebenetzes oder mittels eines anderen an sich bekannten Klebeverfahrens erfolgen. Dabei kann die Verklebung punktuell, linien- bzw. gitterartig o.dgl. erfolgen, um zwischen dem Obermaterial und dem Verbundmaterial die Luft- und Feuchtigkeitsdurchlässigkeit nicht zu beeinträchtigen.

Erfindungsgemäß ist es auch möglich, daß das Obermaterial durch eine Kaschierung an der Oberseite des Verbundmaterials festgelegt ist. Das auf diese Weise erzielte Zusammenlaminieren kann bspw. mittels eines an sich bekannten Flammkaschierungsverfahrens erfolgen.

Bei dem erfindungsgemäßen Flächenelement kann an der von dem Adsorber-Träger abgewandten Seite des Flächenelementes, d.h. an der von einer möglichen Feuchtigkeitsquelle entfernten bzw. abgewandten Seite, eine luft- und feuchtigkeitsdichte Folie flächig festgelegt sein. Besonders vorteilhaft ist es, wenn die besagte Folie von einer wasserdampfdurchlässigen und wasserdichten Folie gebildet ist, weil hierdurch der Benutzungskomfort eines mit dem erfindungsgemäßen Flächenelement ausgerüsteten Gegenstandes weiter verbessert ist.

Wie das weiter oben erwähnte Obermaterial kann die Folie an der von der Feuchtigkeitsquelle abgewandten Seite des erfindungsgemäßen Flächenelementes festgeklebt oder durch eine Kaschierung festgelegt sein.

Erfindungsgemäß kann das Verbundmaterial mit einem Stützträgermaterial kombiniert sein. Das kann bspw. dann zweckmäßig sein, wenn das erfindungsgemäße Flächenelement bei Schuhen als Einlage zur Anwendung gelangt. Hierbei kann es sich um anatomisch geformte Einlagen handeln. Mit Hilfe des besagten Stützträgermaterials ist eine gewünschte anatomische Gestaltung problemlos realisierbar.

Bei einem Flächenelement der zuletzt genannten Art kann das Stützträgermaterial an der Oberseite oder an der Innenseite des Verbundmaterials oder zwischen dem Adsorber-Träger und der Vlieslage vorgesehen sein. Insbesondere dann, wenn das Stützträgermaterial an der Oberseite oder zwischen dem Adsorber-Träger und der Vlieslage des Verbundmaterials lokalisiert ist, ist es erforderlich, daß das Stützträgermaterial luft- und feuchtigkeitsdurchlässig ist. Das ist bspw. durch die eingangs genannte Vernadelung bzw. durch die Faserbärte der Vernadelung realisierbar, wenn das Stützträgermaterial selbst bspw. aus einem geschlossenzelligen Kunststoffschaummaterial besteht.

Das erfindungsgemäße Flächenelement ermöglicht - wie bereits erwähnt worden ist - einen optimalen Feuchtigkeitstransport von einer mit dem Flächenelement in Berührung kommenden Feuchtigkeitsquelle weg, wobei Feuchtigkeit sowohl in der Vlieslage als auch im Adsorber-Träger gespeichert wird. Dieser Feuchtetransport von der Feuchtigkeitsquelle weg wird in vorteilhafter Weise durch die Faserbärte der Vernadelung bewirkt bzw. optimiert. Durch die Vernadelung wird außerdem in vorteilhafter Weise die Flexibilität im Vergleich zur Flexibilität eines Verbundmaterials, das miteinander verklebte Lagen aufweist, wesentlich verbessert.

Bei dem erfindungsgemäßen Flächenelement ist die Nadelung also derartig gestaltet, daß die Faserbärte durch den Adsorber-Träger durchstechen, wobei ein schneller Feuchtetransport von der Oberseite des Flächenelementes bzw. von dessen Obermaterial durch den Adsorber-Träger in die hochsaugfähige Vlieslage mittels der Faserbärte, durch die sich eine Dochtwirkung ergibt, erfolgt. Die Adsorberpartikel im Adsorber-Träger bewirken eine weiter verbesserte Feuchteaufnahme. Außerdem bewirken sie in vorteilhafter Weise eine ausgezeichnete Feuchte-Speicherung, so daß ein Teil der Feuchtigkeit von den Adsorberpartikeln bereits während des Feuchtetransportes in die saugfähige Vlieslage hinein aufgenommen wird. Wie bereits ausgeführt worden ist, dienen die Adsorber insbes. dazu, nach einer Sättigung der saugfähigen Vlieslage die überschüssige Feuchtigkeit aufzunehmen und zu speichern.

Das erfindungsgemäße Flächenelement bildet in vorteilhafter Weise gleichsam ein Feuchte-Regelsystem. Findet nämlich keine Feuchtebelastung des feuchtebelasteten Flächenelementes mehr statt, so erfolgt eine Trocknung des Flächenelementes, d.h. die Feuchtigkeit wird durch die besagte Trocknung wieder abgegeben. Es erfolgt automatisch eine Regenerierung. In vorteilhafter Weise ist der Adsorber-Träger bzw. der Adsorbens des Adsorber-Trägers geruchsbindend wirksam. Die Geruchsbindung erfolgt selbstverständlich nicht nur während der besagten Regenerierung. Daraus resultiert bspw. für eine Person, die einen Gegenstand benutzt, der mit dem erfindungsgemäßen Flächenelement ausgestattet ist, auch über längere Zeiträume eine Steigerung des Wohlbefindens.

Weitere Einzelheiten, Merkmale und Vorteile ergeben sich aus der nachfolgenden Beschreibung von in der Zeichnung abschnittweise geschnitten und stark vergrößert - jedoch nicht maßstabsgerecht - gezeichneten Ausführungsbeispielen des erfindungsgemäßen Flächenelementes. Es zeigen:
- Fig. 1: eine erste Ausbildung des Flächenelementes, und
- Fig. 2: eine zweite Ausführungsform des Flächenelementes.

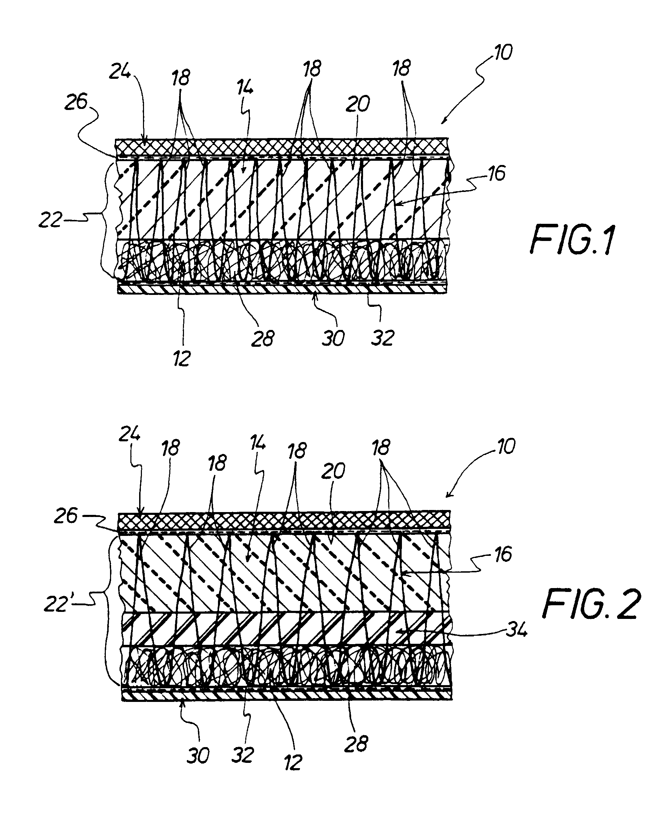

Fig. 1 zeigt eine Ausbildung des Flächenelementes 10, das eine Vlieslage 12 und einen Adsorber-Träger 14 aufweist, die durch eine Vernadelung 16 miteinander verbunden sind. Der Adsorber-Träger 14 ist mit einem Adsorbens ausgerüstet. Die Vernadelung 16 ist von der Vlieslage 12 zum Adsorber-Träger 14 hin orientiert, wobei sich die Faserbärte 18 der Vernadelung 16 von der Vlieslage 12 zum Adsorber-Träger 14 und durch diesen hindurcherstrecken. Durch diese Faserbärte 18 ergibt sich eine Dochtwirkung, die einen optimalen Feuchtigkeitstransport von der Oberseite durch das Flächenelement 10 d.h. zum Adsorber-Träger 14 und zur Vlieslage 12 bewirkt.

An der von der Vlieslage 12 abgewandten Oberseite 20 des Verbundmaterials 22 aus Vlieslage 12 und Adsorberträger 14 ist ein luft- und feuchtigkeitsdurchlässiges Obermaterial 24 festgelegt. Diese Festlegung erfolgt durch eine Klebeschicht 26. Hierbei kann es sich um eine an sich bekannte Kaschierung handeln.

An der vom Adsorber-Träger 14 abgewandten Innenseite 28 des Verbundmaterials 22 ist eine flüssigkeitsdichte Innenfolie 30 festgelegt. Bei dieser Festlegung handelt es sich um eine der Klebeschicht 26 ähnliche Klebeschicht 32. Auch hierbei kann es sich um eine Kaschierung handeln.

Fig. 2 zeigt eine Ausbildung des Flächenelementes 10, die sich von der Ausbildung des Flächenelementes 10 gemäß Fig. 1 dadurch unterscheidet, daß zwischen der Vlieslage 12 und dem Adsorber-Träger 14 ein flächiges Stützträgermaterial 34 vorgesehen ist. Das Stützträgermaterial 34 kann Polsterungseigenschaften aufweisen. Es kann aus einem geschlossenzelligen Kunststoff-Schaummaterial bestehen, das durch die Vernadelung 16 luft- und feuchtigkeitsdurchlässig gemacht ist. Das Stützträgermaterial 34 ist mit Hilfe der Vernadelung 16 mit der Vlieslage 12 und mit dem Adsorber-Träger 14 zum Verbundmaterial 22' verbunden.

Gleiche Einzelheiten sind in Fig. 2 mit denselben Bezugsziffern wie in Fig. 1 bezeichnet, so daß es sich erübrigt, in Verbindung mit Fig. 2 alle diese Einzelheiten noch einmal detailliert zu beschreiben.

Wie bereits eingangs erwähnt worden ist, kann das Flächenelement 10 bspw. bei Bekleidung bzw. Heimtextilien, bei Schuhen bzw. Schuheinlagen, Futter u.dgl., bei Sitzen als Zwischenlage zwischen dem Polsterkern und dem Bezug oder ähnlichen Anwendungen zum Einsatz gelangen.

## Patentansprüche

1. Flächenelement mit einem luftdurchlässigen Träger, der mit einem Adsorbens ausgerüstet ist, wobei der Adsorber-Träger (14) als Flächenelement ausgebildet ist, das mit einer saugfähigen, Feuchtigkeit speichernden Vlieslage (12) durch Vernadelung (16) flächig zu einem luftdurchlässigen Verbundmaterial (22; 22') verbunden ist, wobei die Vernadelung (16) von der Vlieslage (12) zum Adsorber-Träger (14) orientiert ist und die Faserbärte (18) der Vernadelung (16) sich von der Vlieslage (12) zum Adsorber-Träger (14) und durch diesen hindurcherstrecken,
**dadurch gekennzeichnet,**
daß der Adsorber-Träger (14) aus einem offenporigen Schaummaterial besteht, das mit Adsorberpartikeln ausgerüstet ist.

2. Flächenelement nach dem Oberbegriff des Anspruchs 1,
**dadurch gekennzeichnet,**
daß der Adsorber-Träger (14) aus einem Vliesstoff besteht, der mit Adsorberpartikeln ausgerüstet ist.

3. Flächenelement nach dem Oberbegriff des Anspruchs 1,
**dadurch gekennzeichnet,**
daß der Adsorber-Träger (14) aus einem Textilmaterial besteht, das mit Adsorberpartikeln ausgerüstet ist.

4. Flächenelement nach dem Oberbegriff des Anspruchs 1,
**dadurch gekennzeichnet,**
daß der Adsorber-Träger (14) aus einem aktivierten Kohlenstoffaser-Material besteht.

5. Flächenelement nach einem der Ansprüche 1 bis 4,
**dadurch gekennzeichnet,**
daß der Adsorber-Träger (14) eine Wanddicke von 0,5 bis 5 mm aufweist.

6. Flächenelement nach einem der Ansprüche 1 bis 5,
**dadurch gekennzeichnet,**
daß die Vlieslage (12) ein saugfähiges, feuchtigkeitsaufnehmendes Fasermaterial aufweist.

7. Flächenelement nach Anspruch 6,
**dadurch gekennzeichnet,**
daß die Vlieslage (12) ein Flächengewicht von 50 bis 200 g/m² aufweist.

8. Flächenelement nach einem der Ansprüche 1 bis 7,
**dadurch gekennzeichnet,**
daß die Vlieslage (12) aus einem flammfesten Fasermaterial besteht.

9. Flächenelement nach einem der Ansprüche 1 bis 8,
**dadurch gekennzeichnet,**
daß die Vlieslage (12) aus Karbonfasern und/oder aus aktivierten Karbonfasern besteht.

10. Flächenelement nach einem der Ansprüche 1 bis 9,
**dadurch gekennzeichnet,**
daß die Vlieslage (12) aus Schmelzfasern besteht oder zumindest einen Anteil an Schmelzfasern aufweist.

11. Flächenelement nach einem der Ansprüche 1 bis 10,
**dadurch gekennzeichnet,**
daß an der von der Vlieslage (12) abgewandten Oberseite (20) des Verbundmaterials (22; 22') ein luft- und feuchtigkeitsdurchlässiges Obermaterial (24) festgelegt ist.

12. Flächenelement nach Anspruch 11,
**dadurch gekennzeichnet,**
daß das Obermaterial (24) von einem textilen Flächenmaterial, einem Leder- oder einem Kunstledermaterial gebildet ist.

13. Flächenelement nach Anspruch 12,
**dadurch gekennzeichnet,**
daß das Obermaterial (24) an der von der Vlieslage (12) abgewandten Seite des Flächenelementes (10) festgeklebt ist.

14. Flächenelement nach Anspruch 11,
**dadurch gekennzeichnet,**
daß das Obermaterial (24) durch eine Kaschierung an der Oberseite (20) des Verbundmaterials (22; 22') festgelegt ist.

15. Flächenelement nach einem der Ansprüche 1 bis 14,
**dadurch gekennzeichnet,**
daß an der von dem Adsorber-Träger (14) abgewandten Seite (28) des Flächenelementes (10) eine luft- und flüssigkeitsdichte Folie (30) flächig festgelegt ist.

16. Flächenelement nach Anspruch 15,
**dadurch gekennzeichnet,**
daß die Folie (30) von einer wasserdampfdurchlässigen und wasserdichten Folie gebildet ist.

17. Flächenelement nach Anspruch 15,
**dadurch gekennzeichnet,**
daß die Folie (30) an der von der Feuchtigkeitsquelle abgewandten Seite des Flächenelementes (10) festgeklebt ist.

18. Flächenelement nach Anspruch 15,
**dadurch gekennzeichnet,**
daß die Folie (30) durch eine Kaschierung an der Innenseite (28) des Verbundmaterials (22; 22') festgelegt ist.

19. Flächenelement nach einem der Ansprüche 1 bis 18,
**dadurch gekennzeichnet,**
daß das Verbundmaterial (22') mit einem Stützträgermaterial (34) kombiniert ist.

20. Flächenelement nach Anspruch 19,
**dadurch gekennzeichnet,**
daß das Stützträgermaterial (34) an der Oberseite (20) oder an der Innenseite (28) des Verbundmaterials (22) oder zwischen dem Adsorber-Träger (14) und der Vlieslage (12) des Verbundmaterials (22') vorgesehen ist.

## Claims

1. Sheetlike element comprising an air-pervious support provided with an adsorbent, the adsorber support (14) being formed as a sheetlike element bonded to an absorbent, moisture-storing fleece layer (12) by needling (16) in sheetlike fashion to form an air-pervious composite material (22; 22'), the direction of the needling (16) being from the fleece layer (12) to the adsorber support (14) and the fibre wicks (18) of the needling (16) extending from the fleece layer (12) to the adsorber support (14) and therethrough,
characterized in that
the adsorber support (14) consists of an open-cell foam material provided with adsorber particles.

2. Sheetlike element according to the preamble of Claim 1, characterized in that the adsorber support (14) consists of a nonwoven material provided with adsorber particles.

3. Sheetlike element according to the preamble of Claim 1, characterized in that the adsorber support (14) consists of a textile material provided with adsorber particles.

4. Sheetlike element according to the preamble of Claim 1, characterized in that the adsorber support (14) consists of an activated carbon fibre material.

5. Sheetlike element according to any of Claims 1 to 4, characterized in that the adsorber support (14) has a wall thickness of 0.5 to 5 mm.

6. Sheetlike element according to any of Claims 1 to 5, characterized in that the fleece layer (12) comprises an absorbent, moisture-uptaking fibre material.

7. Sheetlike element according to Claim 6, characterized in that the fleece layer (12) has a basis weight of 50 to 200 g/m².

8. Sheetlike element according to any of Claims 1 to 7, characterized in that the fleece layer (12) consists of a flame-resistant fibre material.

9. Sheetlike element according to any of Claims 1 to 8, characterized in that the fleece layer (12) consists of carbon fibres and/or of activated carbon fibres.

10. Sheetlike element according to any of Claims 1 to 9, characterized in that the fleece layer (12) consists of melt fibres or includes at least a fraction of melt fibres.

11. Sheetlike element according to any of Claims 1 to 10, characterized in that that side (20) of the composite material (22; 22') which faces away from the fleece layer (12) has an air- and moisture-pervious outer material (24) localized thereat.

12. Sheetlike element according to Claim 11, characterized in that the outer material (24) is formed by a textile sheet material, a leather material or a leather substitute material.

13. Sheetlike element according to Claim 12, characterized in that the outer material (24) is adhered at that side of the sheetlike element (10) which faces away from the fleece layer (12).

14. Sheetlike element according to Claim 11, characterized in that the outer material (24) is localized at the outer side (20) of the composite material (22; 22') by lamination.

15. Sheetlike element according to any of Claims 1 to 14, characterized in that that side (28) of the sheetlike element (10) which faces away from the adsorber support (14) has an air- and liquid-impervious film (30) localized thereat in sheetlike fashion.

16. Sheetlike element according to Claim 15, characterized in that the film (30) is formed by a water-vapour-pervious film which is water-impervious.

17. Sheetlike element according to Claim 15, characterized in that the film (30) is adhered at that side of the sheetlike element (10) which faces away from the moisture source.

18. Sheetlike element according to Claim 15, characterized in that the film (30) is localized at the inner side (28) of the composite material (22; 22') by lamination.

19. Sheetlike element according to any of Claims 1 to 18, characterized in that the composite material (22') is combined with a supporting material (34).

20. Sheetlike element according to Claim 19, characterized in that the supporting material (34) is provided at the outer side (20) or at the inner side (28) of the composite material (22) or between the adsorber support (14) and the fleece layer (12) of the composite material (22').

## Revendications

1. Elément de surface comportant un support perméable à l'air, et comportant un adsorbant, dans lequel l'adsorbeur-support (14) constitue l'élément de surface qui est relié superficiellement à une toison (12), aspirante, accumulant l'humidité, par un aiguillage (16), pour former un matériau mixte perméable à l'air (22, 22'), dans lequel l'aiguillage (16) est orienté depuis la toison (12) vers l'adsorbeur-support (14) et les poils fibreux (18) de l'aiguillage (16) s'étendent depuis la toison (12) jusqu'à l'adsorbeur-support (14) et transpercent ce dernier,
**caractérisé en ce que** l'adsorbeur-support (14) est constitué par un matériau en mousse synthétique à pores ouverts qui a reçu des particules adsorbantes.

2. Elément de surface selon la partie connue de la revendication 1, caractérisé en ce que l'adsorbeur-support (14) se compose d'une toison qui a reçu des particules adsorbantes.

3. Elément de surface selon la partie connue de la revendication 1, caractérisé en ce que l'adsorbeur-support (14) se compose d'un matériau textile qui a reçu des particules adsorbantes.

4. Elément de surface selon la partie connue de la revendication 1, caractérisé en ce que l'adsorbeur-support (14) se compose d'un matériau en fibre de carbone activées.

5. Elément de surface selon l'une des revendications 1 à 4, caractérisé en ce que l'adsorbeur-support (14) a une épaisseur de 0,5 à 5 mm.

6. Elément de surface selon l'une des revendications 1 à 5, caractérisé en ce que la toison consiste en un matériau fibreux aspirant, absorbant l'humidité.

7. Elément de surface selon la revendication 6, caractérisé en ce que la toison (12) présente une densité superficielle de 50 à 200 g/m².

8. Elément de surface selon l'une des revendications 1 à 7, caractérisé en ce que la toison (12) consiste en un matériau fibreux résistant à l'inflammation.

9. Elément de surface selon l'une des revendications 1 à 8, caractérisé en ce que la toison (12) consiste en fibres de carbone et/ou en fibres de carbone activées.

10. Elément de surface selon l'une des revendications 1 à 9, caractérisé en ce que la toison (12) consiste en fibres fondues, ou comporte au moins une portion de fibres fondues.

11. Elément de surface selon l'une des revendications 1 à 10, caractérisé en ce que sur le côté supérieur (20) du matériau mixte (22, 22') opposé à la toison (12) est fixé un matériau de recouvrement (24) perméable à l'air et à l'humidité.

12. Elément de surface selon la revendication 11, caractérisé en ce que le matériau de recouvrement (24) est formé d'un matériau textile plat, d'un cuir ou d'un cuir artificiel.

13. Elément de surface selon la revendication 12, caractérisé en ce que le matériau de recouvrement (24) est fixé par collage au côté de l'élément de surface (10) opposé à la toison (12).

14. Elément de surface selon la revendication 11, caractérisé en ce que le matériau de recouvrement (24) est fixé au côté supérieur du matériau mixte (22, 22') par application par fusion.

15. Elément de surface selon l'une des revendications 1 à 14, caractérisé en ce que sur le côté (28) opposé à l'adsorbeur-support (14) de l'élément de surface (10) est fixée superficiellement une feuille (30) étanche à l'air et à l'humidité.

16. Elément de surface selon la revendication 15, caractérisé en ce que la feuille (30) consiste en une feuille perméable à la vapeur d'eau et étanche à l'eau.

17. Elément de surface selon la revendication 15, caractérisé en ce que la feuille (30) est fixée par collage au côté de l'élément de surface (10) opposé à la source d'humidité.

18. Elément de surface selon la revendication 15, caractérisé en ce que la feuille (30) est fixée à la face intérieure du matériau mixte (22, 22') par application par fusion.

19. Elément de surface selon la revendication 18, caractérisé en ce que le matériau mixte (22') est combiné avec un matériau de support d'appui (34).

20. Elément de surface selon la revendication 19, caractérisé en ce que le matériau de support d'appui (34) est prévu sur la face supérieure (20) ou sur la face intérieure (28) du matériau mixte (22) ou entre l'adsorbeur-support (14) et la toison du matériau mixte (22').
